# EUROPEAN PATENT APPLICATION

(11) **EP 2 292 905 A1**
(43) Date of publication of application: **09.03.2011**
(21) Application number: 10170297.5
(22) Date of filing: 21.07.2010
(51) Int. Cl.: F01N 3/20

(54) **Exhaust gas purification apparatus**

(30) Priority: 05.08.2009 JP 2009182742
(71) Applicant: Kabushiki Kaisha Toyota Jidoshokki, Kariya-shi, Aichi 448-8671 (JP)
(72) Inventor: Kato, Yoshifumi, Kariya-shi Aichi 448-8671 (JP)
(74) Representative: Vollnhals, Aurel

(57) **Abstract**

An exhaust gas purification apparatus includes an oxidation catalyst, a selective catalytic reduction catalyst, a first urea water supplying device, a second urea water supplying device and a controller. The oxidation catalyst oxidizes nitrogen monoxide to nitrogen dioxide. The selective catalytic reduction catalyst is disposed downstream of the oxidation catalyst. The first urea water supplying device is disposed upstream of the oxidation catalyst. The second urea water supplying device is disposed downstream of the oxidation catalyst and upstream of the selective catalytic reduction catalyst. The controller controls the supply of urea water to exhaust gas by the first urea water supplying device and the second urea water supplying device according to temperature of the exhaust gas.

## Description

### BACKGROUND OF THE INVENTION

The present invention relates to an exhaust gas purification apparatus, and more particularly to an exhaust gas purification apparatus including a urea water SCR (selective catalytic reduction) system for reducing nitrogen oxides (NO_{X}) contained in exhaust gas discharged from a diesel engine.

A urea water SCR system has been developed for reducing NO_{X} contained in exhaust gas discharged from a diesel engine, wherein a SCR catalyst is used for reducing NO_{X} by reacting NO_{X} with ammonia produced by hydrolyzing urea water supplied to exhaust gas thereby to form nitrogen (N₂) and water (H₂O).

In the exhaust gas purification apparatus having a conventional urea water SCR system, hydrocarbons (HC) and carbon monoxide (CO) contained in exhaust gas are oxidized to form water (H₂O and carbon dioxide (CO₂), and a SCR catalyst is disposed downstream of an oxidation catalyst used for promoting oxidation of nitrogen monoxide (NO) to nitrogen dioxide (NO₂) In this exhaust gas purification apparatus, urea water is supplied to exhaust gas from downstream of the oxidation catalyst and upstream of the SCR catalyst for reducing NO_{X} in the SCR catalyst.

In the exhaust gas purification apparatus disclosed in Japanese Patent Application Publication No. 2006-274986, a diesel particulate filter (DPF) supporting the SCR catalyst is disclosed which is disposed downstream of a NO_{X} storage catalyst used for absorbing NO_{X} contained in exhaust gas. In this exhaust gas purification apparatus, when temperature of exhaust gas is relatively low, urea water is supplied from downstream of the NO_{X} storage catalyst and upstream of the DPF with the SCR catalyst for reducing NO_{X} in the SCR catalyst. When the temperature of exhaust gas is relatively high, on the other hand, fuel (HC) is supplied from upstream of the NO_{X} storage catalyst for reducing NO_{X} in the NO_{X} storage catalyst.

In the exhaust gas purification apparatus disclosed in Japanese Patent Application Publication (Translation of PCT Application) No. 2003-525380, the SCR catalyst is disposed downstream of the oxidation catalyst having a desired NO_{X} reduction property under a relatively low temperature. When temperature of exhaust gas is relatively low, urea water is supplied from upstream of the oxidation catalyst for reducing NO_{X} in the oxidation catalyst. When temperature of exhaust gas is relatively high, urea water is supplied from downstream of the oxidation catalyst and upstream of the SCR catalyst for reduction of NO_{X} in the SCR catalyst.

For achieving high purification efficiency in NO_{X} reduction in the SCR catalyst, ammonia should be produced sufficiently by hydrolyzing urea water upstream of the SCR catalyst. In this case, a region that is long enough for the hydrolysis of urea water is required in the apparatus. When the temperature of exhaust gas is relatively high, the length required for hydrolyzing urea water may be relatively short. When the temperature of exhaust gas is relatively low, the length should be relatively long.

In a conventional exhaust gas purification apparatus having the SCR catalyst disposed downstream of the oxidation catalyst, the above length required for hydrolyzing urea water is ensured and the downsizing of the exhaust gas purification apparatus is accomplished by arranging the apparatus such that urea water is supplied to exhaust gas from upstream of the oxidation catalyst. However, if urea water is supplied from upstream of the oxidation catalyst, the urea water is oxidized in the oxidation catalyst when the temperature of exhaust gas is relatively high, so that production of ammonia is inhibited. The produced ammonia is also oxidized in the oxidation catalyst and the purifying efficiency of exhaust gas is decreased.

In the exhaust gas purification apparatus disclosed in the above-described Publication NO. 2006-274986, urea water is supplied from downstream of the NO_{X} storage catalyst and upstream of the DPF with the SCR catalyst when the temperature of exhaust gas is relatively low. In such structure, the length required for hydrolyzing urea water under a relatively low temperature of exhaust gas, or the distance between the NO_{X} storage catalyst and the DPF with the SCR catalyst, should be long, which will inevitably make the exhaust gas purification apparatus large in size.

In the exhaust gas purification apparatus disclosed in the above-described Publication No. 2003-525380, urea water is supplied to exhaust gas from downstream of the oxidation catalyst and upstream of the SCR catalyst when the temperature of exhaust gas is relatively high. The length required for hydrolyzing urea water under a high temperature of exhaust gas, or the distance between the oxidation catalyst and the SCR catalyst, may be short. In this exhaust gas purification apparatus, however, urea water is supplied to exhaust gas from upstream of the oxidation catalyst for reducing NO_{X} in the oxidation catalyst when temperature of exhaust gas is relatively low. Thus, the oxidation catalyst is required to be made of an expensive noble metal having a sufficient NO_{X} reduction property, such as platinum (Pt), rhodium (Rh) or palladium (Pd), which will make the exhaust gas purification apparatus expensive.

The present invention is directed to providing an exhaust gas purification apparatus which is relatively small in size and inexpensive while maintaining sufficient purifying efficiency of exhaust gas.

### SUMMARY OF THE INVENTION

In accordance with the present invention, an exhaust gas purification apparatus includes an oxidation catalyst, a selective catalytic reduction catalyst, a first urea water supplying device, a second urea water supplying device and a controller. The oxidation catalyst oxidizes nitrogen monoxide to nitrogen dioxide. The selective catalytic reduction catalyst is disposed downstream of the oxidation catalyst. The first urea water supplying device is disposed upstream of the oxidation catalyst. The second urea water supplying device is disposed downstream of the oxidation catalyst and upstream of the selective catalytic reduction catalyst. The controller controls the supply of urea water to exhaust gas by the first urea water supplying device and the second urea water supplying device according to temperature of the exhaust gas.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view showing a diesel engine equipped with an exhaust gas purification apparatus according to a first preferred embodiment of the present invention;
Fig. 2 is a sectional view showing the purification apparatus proper of the exhaust gas purification apparatus of Fig. 1;
Fig. 3 shows an example of a data table stored in the dosing control unit (DCU) of the exhaust gas purification apparatus of Fig. 1;
Fig. 4 is a schematic view showing an exhaust gas purification apparatus according to a second preferred embodiment of the present invention, and
Fig. 5 shows a data map stored in the DCU of the exhaust gas purification apparatus of Fig. 4.

### DETAILED DESCRIPTION OF THE PREFERRED EMBODIMENTS

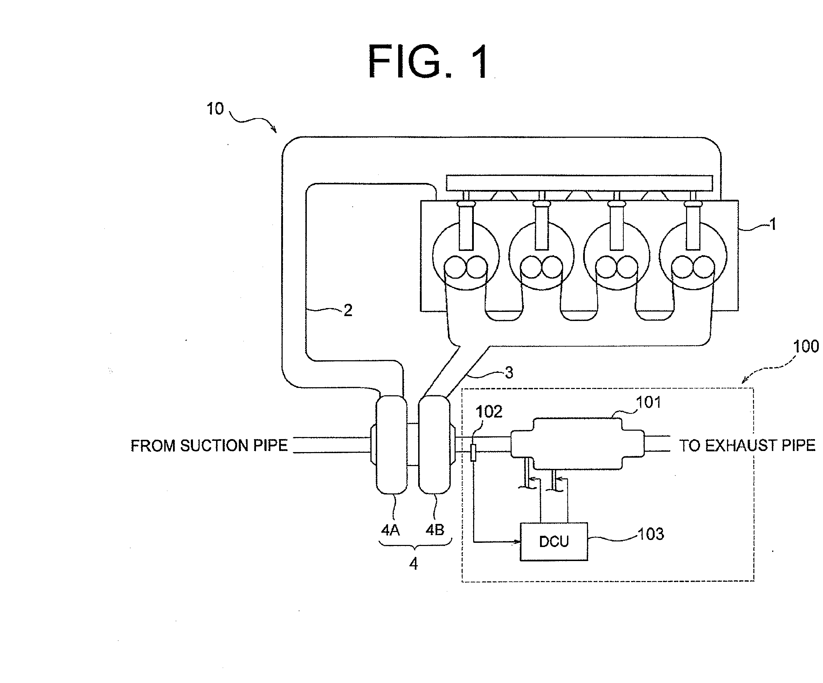

The following will be describe exhaust gas purification apparatuses according to first and second preferred embodiments of the present invention with reference to Fig. 1 through 5.

Fig. 1 shows a diesel engine having an exhaust gas purification apparatus 100 according to the first preferred embodiment of the present invention. The diesel engine has an engine proper 1, an intake manifold 2, an exhaust manifold 3 and a turbocharger 4. The intake manifold 2 and the exhaust manifold 3 are connected to the engine proper 1. The turbocharger 4 includes a compressor housing 4A and a turbine housing 4B. The compressor housing 4A of the turbocharger 4 is connected at the outlet thereof to the upstream end of the intake manifold 2, and the inlet of the compressor housing 4A is connected to a suction pipe (not shown). The turbine housing 4B of the turbocharger 4 is connected to the downstream of the exhaust manifold 3, and the exhaust gas purification apparatus 100 has a purification apparatus proper 101 disposed downstream of the turbine housing 4B of the turbocharger 4. The engine proper 1, the intake manifold 2, the exhaust manifold 3 and the turbocharger 4 form an engine assembly 10.

A temperature sensor 102 is disposed between the turbine housing 4B of the turbocharger 4 and the purification apparatus proper 101 for measuring temperature of exhaust gas. The temperature sensor 102 and the purification apparatus proper 101 are electrically connected to a dosing control unit (DCU) 103 of the exhaust gas purification apparatus 100 serving as a controller for controlling the supply of urea water (or reducing agent) to exhaust gas. The purification apparatus proper 101, the temperature sensor 102 and the DCU 103 form the exhaust gas purification apparatus 100.

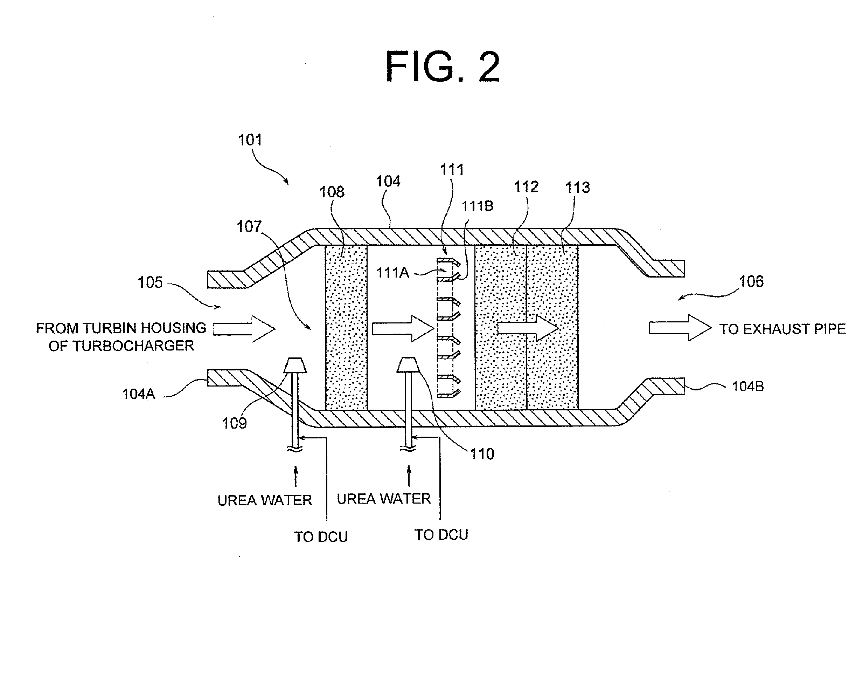

Referring to Fig. 2, the purification apparatus proper 101 includes a casing 104 having a substantially cylindrical shape. The casing 104 has a first end 104A and a second end 104B. An exhaust gas inlet 105 is formed in the casing 104 at the first end 104A thereof for communication with the turbine housing 4B of the turbocharger 4. An exhaust gas outlet 106 is formed in the casing 104 at the second end 104B thereof for communication with an exhaust pipe (not shown). An exhaust gas passage 107 is formed in the casing 104 for allowing exhaust gas to flow therein from the exhaust gas inlet 105 to the exhaust gas outlet 106.

An oxidation catalyst 108 is disposed in the exhaust gas passage 107 for oxidizing hydrocarbons (HC) and carbon monoxide (CO) contained in exhaust gas thereby to form water (H₂O) and carbon dioxide (CO₂) and also promoting oxidation of NO to NO₂. The purifying efficiency of a SCR catalyst 113, which will be described later, becomes maximum when the molar ratio between NO and NO₂ is one to one. The amount of NO is greater than that of NO₂ in normal exhaust gas. Therefore, the purifying efficiency of exhaust gas can be improved by oxidizing a part of NO contained in exhaust gas to NO₂ in the oxidation catalyst 108.

A urea water injection nozzle 109 serving as a first urea water supplying device is disposed upstream of the oxidation catalyst 108 for supplying urea water to exhaust gas. A urea water injection nozzle 110 serving as a second urea water supplying device is disposed downstream of the oxidation catalyst 108 and upstream of the SCR catalyst 113. The urea water injection nozzles 109, 110 are connected fluidly with a urea water tank (not shown) and electrically connected to the DCU 103 for controlling the injection (urea water supply) of the urea water injection nozzles 109, 110.

A mixer 111 is disposed downstream of the urea water injection nozzle 110 for mixing ammonia produced by hydrolyzing urea water with exhaust gas. A plurality of holes 111A is formed in the form of a lattice through the mixer 111, each extending along the flow direction of exhaust gas (direction of arrows shown in Fig. 2). The mixer 111 has thin plates 111 B arranged adjacently to the downstream end of the holes 111A such that any two adjacent thin plates 111 B are bent in opposite directions by an angle between 20 and 30 degrees.

A DPF 112 and a SCR catalyst 113 are disposed downstream of the mixer 111. The DPF 112 is used for removing particulate matter (PM) contained in exhaust gas, and the SCR catalyst 113 for reducing NO_{X} by reacting NO_{X} with ammonia thereby to form N₂ and H₂O. According to the first preferred embodiment of the present invention, the DPF 112 is formed integrally with the SCR catalyst 113.

The oxidation catalyst 108, the mixer 111, the DPF 112 and the SCR catalyst 113 are disposed in this order in the casing 104 of the purification apparatus proper 101.

The following will describe the operation of the exhaust gas purification apparatus 100 according to the first preferred embodiment of the present invention. Exhaust gas discharged from the engine assembly 10 is flowed through the exhaust gas inlet 105 into the exhaust gas passage 107 formed in the purification apparatus proper 101, as indicated by arrows in Fig. 2. Then, the exhaust gas is flowed into the oxidation catalyst 108 to oxidize HC and CO to CO₂ and H₂O and a part of NO to NO₂.

The DCU 103 controls the operation of the urea water injection nozzles 109, 110 for supplying urea water to exhaust gas from upstream or downstream of the oxidation catalyst 108 according to temperature of exhaust gas detected by the temperature sensor 102 disposed upstream of the urea water injection nozzle 109.

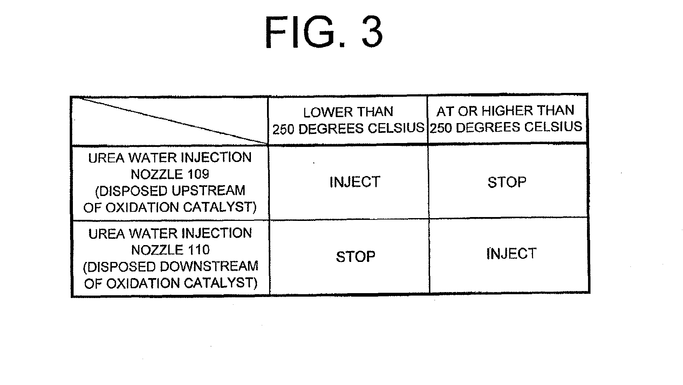

Specifically, the DCU 103 has therein a data table as shown in Fig. 3 used for controlling the operation of the urea water injection nozzle 109, 110. The data table is made based on the test conducted under various temperatures of exhaust gas to determine from which of the urea water injection nozzle 109 or 110 urea water should be supplied to exhaust gas for increasing the amount of ammonia produced by hydrolyzing urea water. The DCU 103 determines which of the urea water injection nozzles 109, 110 should be operated to supply urea water to exhaust gas according to the data of temperatures of exhaust gas detected successively by the temperature sensor 102 at a predetermined time interval.

According to the example of data table shown in Fig. 3, when the temperature of exhaust gas is lower than the threshold value of 250 degrees Celsius, the urea water injection nozzle 109 is operated to supply urea water to exhaust gas from upstream of the oxidation catalyst 108. The reaction rate of hydrolysis is relatively slow under such low temperature of exhaust gas. However, the distance that urea water moves for hydrolysis (or the distance from the upstream side of the oxidation catalyst 108 to the SCR catalyst 113) may be set longer, so that a sufficient amount of ammonia is produced. Under a low temperature of exhaust gas, urea water and the produced ammonia are hardly oxidized in the oxidation catalyst 108. On the other hand, when the temperature of exhaust gas is at the threshold value of 250 degrees Celsius or higher, the urea water injection nozzle 110 is operated to supply urea water to exhaust gas downstream of the oxidation catalyst 108. Under a high exhaust gas temperature, the reaction rate of hydrolysis is relatively high. Thus, even if the aforementioned distance for the hydrolysis (or the distance from the downstream side of the oxidation catalyst 108 to the SCR catalyst 113) is short, sufficient amount of ammonia is produced. Since urea water is supplied downstream of the oxidation catalyst 108, urea water and the produced ammonia are hardly oxidized in the oxidation catalyst 108.

Referring to Fig. 2, urea water supplied from the urea water injection nozzles 109, 110 is hydrolyzed to ammonia and CO₂ before arriving at the SCR catalyst 113. Produced ammonia is mixed with exhaust gas by the swirling flow generated by the thin plates 111 B arranged downstream of the mixer 111. Exhaust gas mixed with ammonia flows into the DPF 112, in which PM contained in exhaust gas is captured, and then into the SCR catalyst 113. NO_{X} contained in exhaust gas is reacted with ammonia and converted to N₂ and H₂O. Exhaust gas thus purified is discharged through the exhaust gas outlet 106.

According to the exhaust gas purification apparatus 100 of the first preferred embodiment of the present invention, when the temperature of exhaust gas is lower than the threshold value of 250 degrees Celsius and the distance required for the hydrolysis is relatively long, the urea water injection nozzle 109 is operated to supply urea water to exhaust gas upstream of the oxidation catalyst 108. The temperature of exhaust gas is then relatively low, so that urea water and produced ammonia are hardly oxidized in the oxidation catalyst 108. On the other hand, when the temperature of exhaust gas is at the threshold value of 250 degrees Celsius or higher, and the distance for the hydrolysis is relatively short, the urea water injection nozzle 110 is operated to supply urea water to exhaust gas downstream of the oxidation catalyst 108. In this case, urea water is supplied downstream of the oxidation catalyst 108, so that urea water and produced ammonia are hardly oxidized in the oxidation catalyst 108. Thus, the threshold value is an upper limit temperature that ammonia produced from the urea water supplied by the urea water injection nozzle 109 is substantially not oxidized in the oxidation catalyst 108.

Therefore, the distance required for the hydrolysis may be ensured, and the exhaust gas purification apparatus may be downsized. In addition, urea water and produced ammonia are hardly oxidized in the oxidation catalyst 108 and, therefore, sufficient purifying efficiency of exhaust gas is maintained.

The oxidation catalyst 108 is provided for oxidizing HC and CO contained in exhaust gas to CO₂ and H₂O and NO to NO₂. Thus, the oxidation catalyst 108 is not required to have reduction property of NO_{X} contained in exhaust gas. Therefore, the oxidation catalyst 108 is not required to be made of expensive noble metal having a sufficient NO_{X} reduction property, such as platinum (Pt), rhodium (Rh) and palladium (Pd), thereby reducing the manufacturing cost of the exhaust gas purification apparatus. The oxidation catalyst 108 may be made of a silver (Ag) catalyst (silver-based catalyst, such as Ag₂O) which is relatively inexpensive and does not have a NO_{X} reduction property, thereby reducing the manufacturing cost of the exhaust gas purification apparatus.

The provision of the mixer 111 upstream of the SCR catalyst 113 serves to promote mixing of ammonia produced by hydrolyzing urea water with exhaust gas. The DPF 112 is disposed upstream of the SCR catalyst 113 for removing PM contained in exhaust gas. The DPF 112 is formed integrally with the SCR catalyst 113, which makes possible downsizing the exhaust gas purification apparatus. The oxidation catalyst 108, the mixer 111, the DPF 112 and the SCR catalyst 113 are disposed in the same casing 104, which also makes possible further downsizing the exhaust gas purification apparatus.

The above-described conventional exhaust gas purification apparatus is too large and to be installed in engine compartment and, therefore, mounted in a vehicle at the bottom thereof. The exhaust gas purification apparatus 100 according to the above-described first preferred embodiment of the present invention is made so small in size that it may be mounted directly to the engine assembly 10 and installed in the engine compartment. Thus, hydrolysis of urea water is promoted by the heat generated by the engine assembly 10, and the catalysis of the oxidation catalyst 108 and the SCR catalyst 113 may be activated effectively.

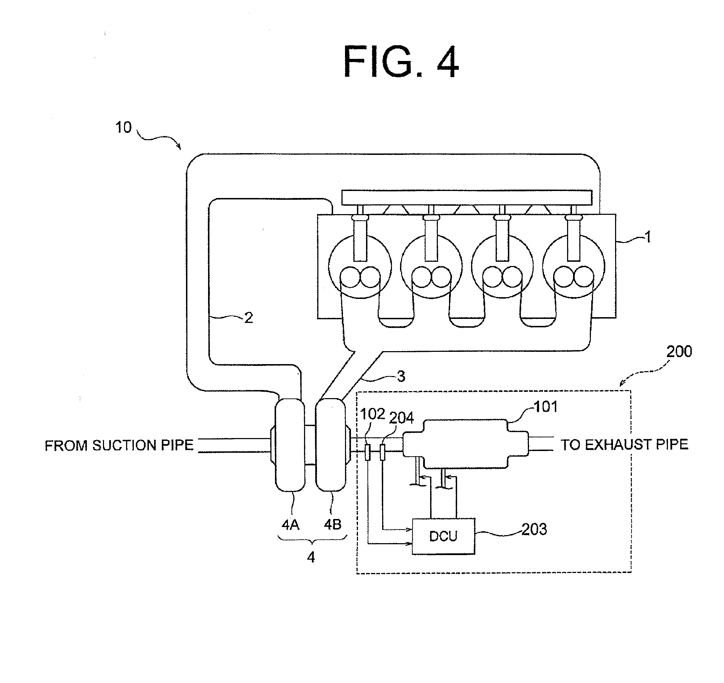

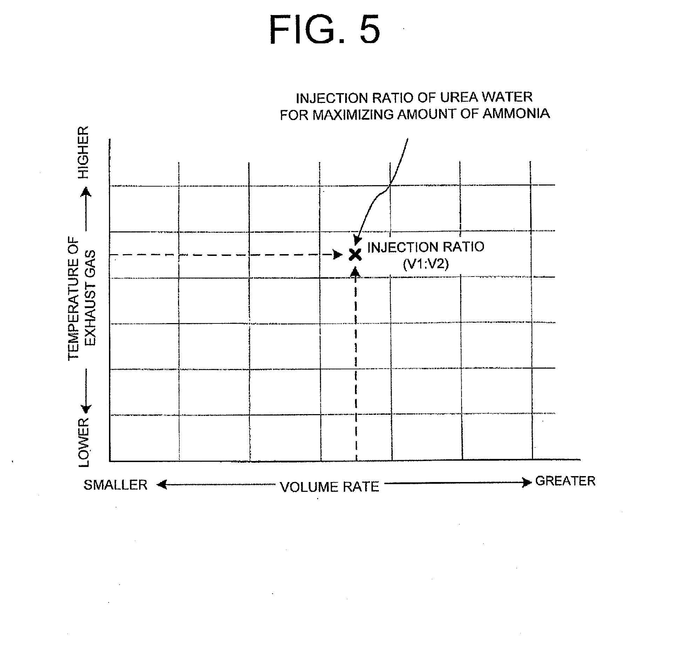

The following will describe an exhaust gas purification apparatus according to a second preferred embodiment of the present invention with reference to Figs. 4 and 5. The following description will use the same reference numerals for the common elements or components in the first and the second embodiments, and the description of such elements or components will be omitted.

In the exhaust gas purification apparatus 200 according to the second preferred embodiment of the present invention, a flow rate sensor 204 for measuring the volume rate of exhaust gas is disposed between the turbine housing 4B of the turbocharger 4 and the purification apparatus proper 101 as well as the temperature sensor 102. A DCU 203 is provided instead of the DCU 103 of the first preferred embodiment of the present invention.

The DCU 203 controls the operation of the urea water injection nozzles 109,110 according to the temperature and the volume rate of exhaust gas detected by the temperature sensor 102 and the flow rate sensor 204 disposed upstream of the urea water injection nozzle 109, respectively.

Specifically, the DCU 203 has therein a data map as shown in Fig. 5 for controlling the injection ratio between the urea water injection nozzles 109, 110 (V1 :V2) or a ratio of the volume of urea water supplied to exhaust gas by the urea water injection nozzle 109 and the volume of urea water supplied to exhaust gas by the urea water injection nozzle 110. The data map is made based on the test conducted under various temperatures and volume rates of exhaust gas to determine how the injection ratio of the urea water injection nozzles 109, 110 (V1:V2) should be controlled for maximizing the amount of ammonia produced by the hydrolysis. According to the temperatures and the volume rates of exhaust gas detected by the temperature sensor 102 and the flow rate sensor 204, the DCU 203 determines optimum injection ratio (V1:V2) at a predetermined time interval for operating the urea water injection nozzles 109, 110 to supply urea water to exhaust gas.

To describe qualitative characteristics of the data map shown in Fig. 5, when the temperature of exhaust gas is relatively high, urea water and produced ammonia are oxidized in the oxidation catalyst 108. In this case, it is preferable that urea water is supplied to exhaust gas mainly by the urea water injection nozzle 110 disposed downstream of the oxidation catalyst 108. When the volume of exhaust gas is relatively large, urea water requires relatively long distance to move for being hydrolyzed. In this case, it is preferable that urea water is supplied to exhaust gas mainly by the urea water injection nozzle 109 disposed upstream of the oxidation catalyst 108. Thus, the operation of the urea water injection nozzle 109 and the urea water injection nozzle 110 is controlled so that the lower the temperature of the exhaust gas and/or the greater the volume rate of exhaust gas, the greater the ratio of the volume of the urea water. With the detected temperature and volume rate of exhaust gas taken into consideration, the DCU 203 figures out the optimum injection ratio (V1:V2).

As described above, according to the exhaust gas purification apparatus 200 of the second preferred embodiment of the present invention, the DCU 203 controls the injection ratio (V1:V2) of the urea water injection nozzles 109, 110 based on temperature and volume rate of exhaust gas. Thus, the exhaust gas purification apparatus can operate under the optimum purifying efficiency of exhaust gas.

According to the first and second preferred embodiments of the present invention, the engine assembly 10 has the turbocharger 4. Alternatively, the engine assembly 10 may dispense with the turbocharger 4, and the exhaust gas purification apparatuses 100, 200 may be disposed downstream of the exhaust manifold 3 of the engine assembly 10.

According to the first and second preferred embodiments of the present invention, each one of the urea water injection nozzles 109, 110 is provided. Alternatively, a plurality of nozzles may be provided for each of the urea water injection nozzles 109, 110.

According to the first and second preferred embodiments of the present invention, the SCR catalyst 113 is disposed downstream of and formed integrally with the DPF 112. Alternatively, the DPF 112 may be formed integrally with the SCR catalyst 113 such that the DPF 112 supports the SCR catalyst 113.

According to the first and second preferred embodiments, the DPF 112 is formed integrally with the SCR catalyst 113. Alternatively, the DPF 112 may be formed separately from the SCR catalyst 113.

According to the first and second preferred embodiments of the present invention, the mixer 111 and the DPF 112 are provided. Alternatively, the mixer 111 and the DPF 112 may be omitted.

According to the first and second preferred embodiments of the present invention, the engine control unit (ECU) used for controlling the operation of the engine assembly 10 is provided separately from the DCU 103, 203.

Alternatively, the ECU may be formed to include the functions of the DCU 103, 203, thereby omitting the DCU 103, 203.

An exhaust gas purification apparatus includes an oxidation catalyst, a selective catalytic reduction catalyst, a first urea water supplying device, a second urea water supplying device and a controller. The oxidation catalyst oxidizes nitrogen monoxide to nitrogen dioxide. The selective catalytic reduction catalyst is disposed downstream of the oxidation catalyst. The first urea water supplying device is disposed upstream of the oxidation catalyst. The second urea water supplying device is disposed downstream of the oxidation catalyst and upstream of the selective catalytic reduction catalyst. The controller controls the supply of urea water to exhaust gas by the first urea water supplying device and the second urea water supplying device according to temperature of the exhaust gas.

## Claims

1. An exhaust gas purification apparatus (100, 200) comprising;
an oxidation catalyst (108) oxidizing nitrogen monoxide to nitrogen dioxide:
a selective catalytic reduction catalyst (113) disposed downstream of the oxidation catalyst (108);
a first urea water supplying device (109) disposed upstream of the oxidation catalyst (108);
a second urea water supplying device (110) disposed downstream of the oxidation catalyst (108) and upstream of the selective catalytic reduction catalyst (113);
a controller (103, 203) controlling the supply of urea water to exhaust gas by the first urea water supplying device (109) and the second urea water supplying device (110) according to temperature of the exhaust gas.

2. The exhaust gas purification apparatus (100) according to claim 1, wherein the controller (103) controls the operation of the first urea water supplying device (109) to supply the urea water to the exhaust gas when the temperature of the exhaust gas is lower than the threshold value and the second urea water supplying device (110) to supply the urea water to the exhaust gas when the temperature of the exhaust gas is at the threshold value or higher than the threshold value.

3. The exhaust gas purification apparatus (100) according to claim 2, wherein the threshold value is an upper limit temperature that ammonia produced from the urea water supplied by the first urea water supplying device (109) is substantially not oxidized in the oxidation catalyst (108).

4. The exhaust gas purification apparatus (100) according to any one of claims 1 through 3, further comprising a temperature sensor (102) disposed upstream of the first urea water supplying device (109) for measuring temperature of the exhaust gas.

5. The exhaust gas purification apparatus (200) according to claim 1, wherein the controller (203) controls the operation of the first urea water supplying device (109) and the second urea water supplying device (110) according to both temperature and volume rate of the exhaust gas.

6. The exhaust gas purification apparatus (200) according to claim 5, wherein the operation of the first urea water supplying device (109) and the second urea water supplying device (110) is controlled by a ratio of volume of the urea water supplied to the exhaust gas by the first urea water supplying device (109) and volume of the urea water supplied to the exhaust gas by the second urea water supplying device (110).

7. The exhaust gas purification apparatus (100) according to claim 6, wherein the operation of the first urea water supplying device (109) and the second urea water supplying device (110) is controlled so that the lower the temperature of the exhaust gas and/or the greater the volume rate of the exhaust gas, the greater the ratio of the volume of the urea water.

8. The exhaust gas purification apparatus (200) according to claims 5 through 7, further comprising a temperature sensor (102) disposed upstream of the first urea water supplying device (109) for measuring temperature of the exhaust gas and a flow rate sensor (204) disposed upstream of the first urea water supplying device (109) for measuring volume rate of the exhaust gas.

9. The exhaust gas purification apparatus (100, 200) according to any one of claims 1 through 8, wherein the oxidation catalyst (108) is made of a silver (Ag) catalyst.

10. The exhaust gas purification apparatus (100, 200) according to any one of claims 1 through 9, further comprising a mixer (111) disposed upstream of the selective catalytic reduction catalyst (113) for mixing ammonia produced by hydrolyzing the urea water with the exhaust gas.

11. The exhaust gas purification apparatus (100, 200) according to any one of claims 1 through 10, further comprising a diesel particulate filter (112) disposed upstream of the selective catalytic reduction catalyst (113).

12. The exhaust gas purification apparatus (100, 200) according to claim 11, wherein the diesel particulate filter (112) is formed integrally with the selective catalytic reduction catalyst (113).

13. The exhaust gas purification apparatus (100, 200) according to any one of claims 1 through 12, wherein the exhaust gas purification apparatus (100, 200) is mounted to an engine assembly (10).
